# EUROPÄISCHE PATENTSCHRIFT

(11) **EP 0 519 340 B1**
(45) Veröffentlichungstag und Bekanntmachung des Hinweises auf die Patenterteilung: **13.07.1994**
(21) Anmeldenummer: 92109895.0
(22) Anmeldetag: 12.06.1992
(51) Int. Cl.: F16D 65/10

(54) **Bremstrommel**
Brake drum
Tambour de frein

(30) Priorität: 18.06.1991 DE 4120019; 20.03.1992 DE 9203773 U
(43) Veröffentlichungstag der Anmeldung: 23.12.1992
(73) Patentinhaber: Bergische Achsenfabrik Fr. Kotz & Söhne, 51674 Wiehl (DE)
(72) Erfinder: Ebbinghaus, Wilfried, W-5276 Wiehl (DE); Laudszun, Heinz, Dr., W-5276 Wiehl 1 (DE)
(74) Vertreter: Stenger, Watzke & Ring Patentanwälte

(56) Entgegenhaltungen:
- EP-B- 0 030 608
- GB-A- 819 089
- US-A- 2 095 719
- PATENT ABSTRACTS OF JAPAN, vol. 5, no. 166 (M-093) 23. Oktober 1981; & JP-A-56090133 (Isuzu Motors) 22. Juli 1981

## Beschreibung

Gegenstand der Erfindung ist eine Bremstrommel mit einer zylindrischen Anlagefläche für Bremsbeläge und einer kreisförmigen Öffnung.

Eine Bremstrommel der vorstehend beschriebenen Gattung ist beispielsweise aus der EP-PS 0 030 608 oder JP-A- 56 090 133 bekannt. Bei dieser Bremstrommel sind die Bremsbacken bzw. die darauf angeordneten Bremsbeläge ausgehend von der kreisförmigen Öffnung der Bremstrommel nach innen versetzt angeordnet. Beim bestimmungsgemäßen Betrieb der Bremstrommel mit der darin angeordneten Backenbremse verschleißen zwar die Bremsbeläge, gleichzeitig graben sie sich aber auch in die Anlagefläche der Bremstrommel ein. Dabei bleibt an der Öffnung die Ausgangswandstärke der Bremstrommel erhalten, so daß sich im Laufe der Zeit mit zunehmenden Bremstrommelverschleiß an der Öffnung ein umlaufender Vorsprung bildet, der einen direkten Kontrollblick auf die Dicke der Bremsbeläge und ein Erkennen des Bremstrommelverschleißes erschwert. Außerdem muß der umlaufende Vorsprung bei einem Bremsbelagwechsel spanabhebend nachgearbeitet werden.

Aus der DE-AS 11 28 766 ist eine Backenbremse für Kraftfahrzeuge bekannt, bei der Bremsbeläge und die Bremstrommel in axialer Richtung bündig abschließen. Bei dieser bekannten Anordnung von Bremsbelag und Anlagefläche der Bremstrommel bleibt zwar bei bündigem Abschluß kein Rand der Bremstrommel stehen, jedoch ist durch das starke Verschmutzen der Bremsen infolge des Abriebs der Bremsbeläge der Bremsbelagverschleiß nur schwer zu ermitteln.

Darüber hinaus ist der Bremstrommelverschleiß bei dieser Backenbremse so gut wie gar nicht zu erkennen.

Davon ausgehend liegt der Erfindung die **Aufgabe** zugrunde, eine Bremstrommel zu schaffen, die bei einem Bremsbelagwechsel kein Nacharbeiten erfordert und an deren Öffnung die erreichte und die maximale Verschleißtiefe abgemessen werden können.

Als technische **Lösung** wird dafür vorgeschlagen, an der Öffnung einen in die Anlagefläche eingelassenen, umlaufenden Falz anzuordnen, der sich in axialer Richtung mindestens bis zu den Bremsbelägen erstreckt.

Bei einer bevorzugten Ausführungsform kann der Falz in axialer Richtung die Vorderkante der Bremsbeläge überlappen. In radialer Richtung sollte der Falz eine Tiefe haben, die dem maximalen Bremstrommelverschleiß entspricht. Am inneren Ende der Anlagefläche ist bei der bevorzugten Ausführungsform eine Nut eingelassen, welche in axialer Richtung die hintere Kante der Bremsbeläge überlappt und in radialer Richtung eine Tiefe hat, die ebenfalls dem maximalen Bremstrommelverschleiß entspricht. Durch diese Nut zwischen Boden und Anlagefläche der Bremstrommel wird ein Ausdrehen der Anlagefläche beim Bremsbelagwechsel vermieden.

Um ein Überwachsen des äußeren Randes der Bremsbeläge in den Falz zu verhindern, kann der radiale Schenkel des Falzes umlaufend wellenförmig ausgestaltet sein. Die Wellenberge überragen dabei in axialer Richtung die Bremsbeläge und verhindern somit das Zuwachsen des Falzes.

Bei einer alternativen Ausführungsform weisen die Bremsbeläge am der Öffnung zugewandten Rand Ausnehmungen auf, die eine Kontrolle sowohl des Bremsbelagverschleißes als auch des Bremstrommelverschleißes erlauben.

Die Kontrolle des Bremsbelag- und Bremstrommelverschleißes wird bei einer praktischen Ausführungsform der Erfindung durch ein aus dem Abdeckblech ausgestanztes Sichtfenster erleichtert. Um das Eindringen von Schmutz und Spritzwasser in die Bremstrommel zu verhindern, kann das Sichtfenster mit einer in das Abdeckblech eingehängten Gummi- oder Kunststoffabdeckung verschlossen werden.

Eine nach dieser technischen Lehre ausgebildete Bremstrommel hat den **Vorteil,** daß bei einer Kontrolle der Fortschritt des Bremsbelagverschleißes und des Bremstrommelverschleißes direkt erkannt und auch gemessen werden können. Außerdem erübrigt die Erfindung ein Beseitigen des beim Stand der Technik mit zunehmenden Bremstrommelverschleiß an der Öffnung entstehenden, umlaufenden Vorsprunges. Damit schlägt die Erfindung gleichzeitig drei Fliegen mit einer Klappe, in dem sie eine bessere Kontrolle des Bremsbelagverschleißes und des Bremstrommelverschleißes ermöglicht und gleichzeitig ein Nacharbeiten der Bremstrommel bei einem Bremsbelagwechsel erübrigt.

Weitere Einzelheiten und Vorteile ergeben sich aus der nachfolgenden Beschreibung der zugehörigen Zeichnungen, in denen drei bevorzugte Ausführungsformen einer erfindungsgemäß ausgebildeten Bremstrommel schematisch dargestellt worden sind. In den Zeichnungen zeigen:
- Fig. 1: Eine Bremstrommel mit Abdeckblech im Querschnitt;
- Fig. 2: einen vergrößerten Ausschnitt aus Fig. 1 entsprechend der strichpunktierten Linie II mit einer neuen Bremstrommel und neuen Bremsbelägen;
- Fig. 3: den gleichen Ausschnitt entsprechend der strichpunktierten Linie III mit teilweise verschlissenem Bremsbelag und teilweise verschlissener Bremstrommel;
- Fig. 4: denselben Ausschnitt entsprechend der strichpunktierten Linie IV mit verschlissener Bremstrommel und verschlissenem Bremsbelag im Endzustand;
- Fig. 5: einen vergrößerten Ausschnitt einer zweiten Ausführungsform mit neuer Bremstrommel und neuen Bremsbelägen gemäß der strichpunktierten Linie V in Fig. 1;
- Fig. 6: eine vergrößerte Ansicht gemäß der Richtung VI in Fig. 5 (ohne Bremsbacke und ohne Bremsbelag);
- Fig. 7: einen ausschnittweisen Querschnitt einer dritten Ausführungsform mit neuer Bremstrommel und neuen Bremsbelägen gemäß der Schnittlinie VII-VII in Fig 8;
- Fig. 8: denselben Ausschnitt gemäß der Ansicht VIII in Fig. 7;
- Fig. 9: einen ausschnittweisen Längsschnitt gemäß der Schnittlinie IX-IX in Fig. 8;

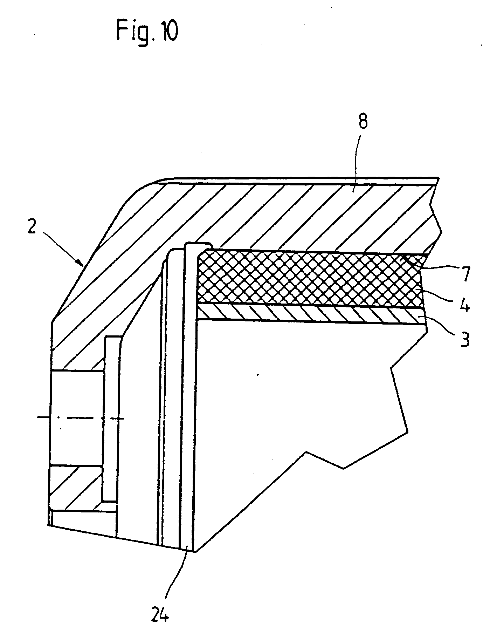

- Fig. 10: eine Bremstrommel im Querschnitt.

Auf einer, aus Gründen der Vereinfachung nicht dargestellten Nabe eines Achskörpers 1 ist eine Bremstrommel 2 drehbar befestigt. Innerhalb der Bremstrommel 2 sind zwei schematisch dargestellte Bremsbacken 3 angeordnet, die mit Bremsbelägen 4 bestückt sind und sich an einem unteren Stützlager 5 abstützen, welches an einer mit dem Achskörper 1 verbundenen Bremsbrücke 6 befestigt ist. Am oberen Ende können die Bremsbacken 3 mittels einer aus Gründen der Vereinfachung nicht dargestellten Spreizvorrichtung gegen eine zylindrische Anlagefläche 7 der Bremstrommel 2 gedrückt werden.

Die Bremstrommel 2 hat an ihrem Mantel 8 eine angeformte bzw. angegossene Randverstärkung 9. Auf der Innenseite der Randverstärkung 9 befindet sich eine Auswurfschräge 10, die in dem dargestellten Ausführungsbeispiel konkav gekrümmt ist. Vor der Bremstrommel 2 ist ein freistehendes und mit dem Achskörper 1 verbundenes Abdeckblech 11 angeordnet, welches mit einem konvex geformten äußeren Rand 12 in die Auswurfschräge 10 eingreift und mit dieser einen von innen nach außen sich konisch verjüngenden Dichtspalt 13 bildet.

Die zylindrische Anlagefläche 7 der Bremstrommel 2 hat in axialer Richtung eine kreisrunde Öffnung 14. Im Übergangsbereich von der Anlagefläche 7 zur Öffnung 14 ist in der Bremstrommel 2 ein in die Anlagefläche 7 hereinreichender, umlaufender Falz 15 angeordnet, der in axialer Richtung den vorderen Rand der Bremsbeläge 4 überlappt. In radialer Richtung hat der Falz 15 eine Tiefe, die dem maximalen Bremstrommelverschleiß entspricht.

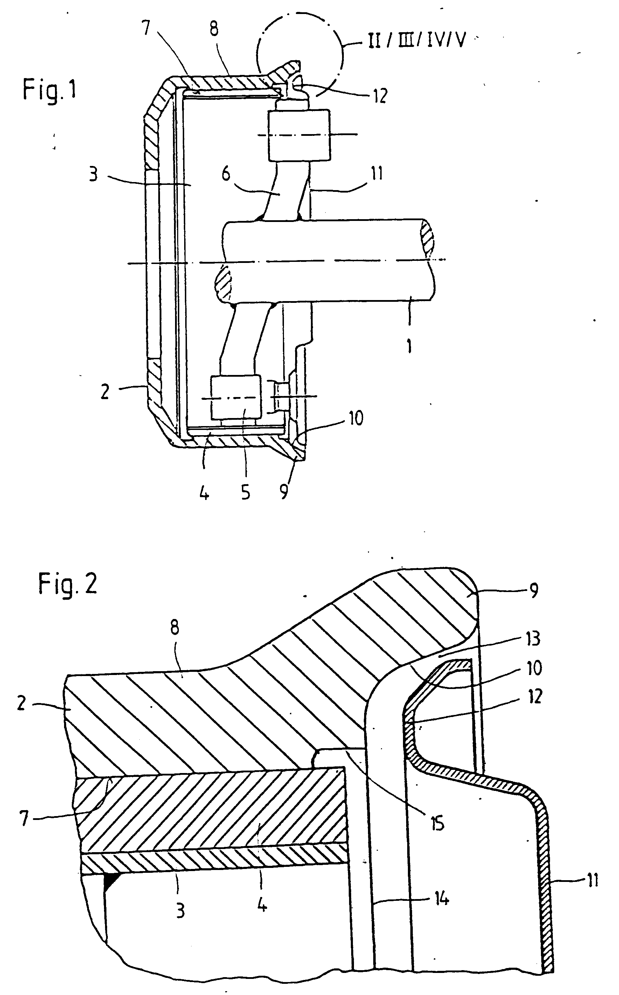

Bei dem in der Fig. 2 dargestellten Betriebszustand sind Bremstrommel 2 und Bremsbelag 4 neu. Der Falz 15 hat seine maximale Tiefe, welche gleichzeitig den maximalen Bremstrommelverschleiß anzeigt.

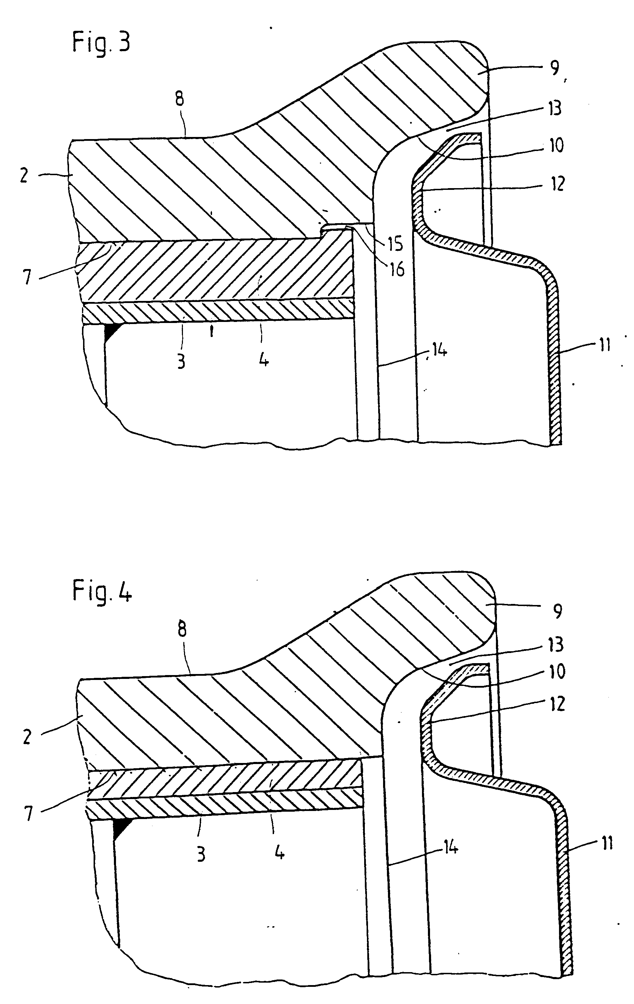

Bei dem in der Fig. 3 dargestellten Betriebszustand sind Bremstrommel 2 und Bremsbeläge 4 schon teilweise verschlissen. Die radiale Tiefe des Falzes 15 hat abgenommen. Gleichzeitig sind die Bremsbeläge 4 an der Öffnung 14 in den Falz 15 hineingewachsen. Die Größe eines noch offenen Spaltes 16 zwischen Bremstrommel 2 und Bremsbelag 4 im Falz 15 ist ein Maß für den bereits eingetretenen Bremstrommel- und Bremsbelagverschleiß. Bei gelüfteten Bremsbacken kann die Resttiefe des Falzes 15 exakt gemessen werden, d.h. der Bremstrommelverschleiß exakt beurteilt werden.

Bei dem in der Fig. 4 dargestellten Betriebszustand ist der Falz 15 verschwunden. Die Anlagefläche 7 verläuft gradlinig bis zur Öffnung 14. Damit hat die Bremstrommel 2 ihren maximalen Verschleißzustand erreicht und muß ausgetauscht werden. Auch die Bremsbeläge 4 haben einen Verschleißzustand erreicht, der einen Wechsel erfordert.

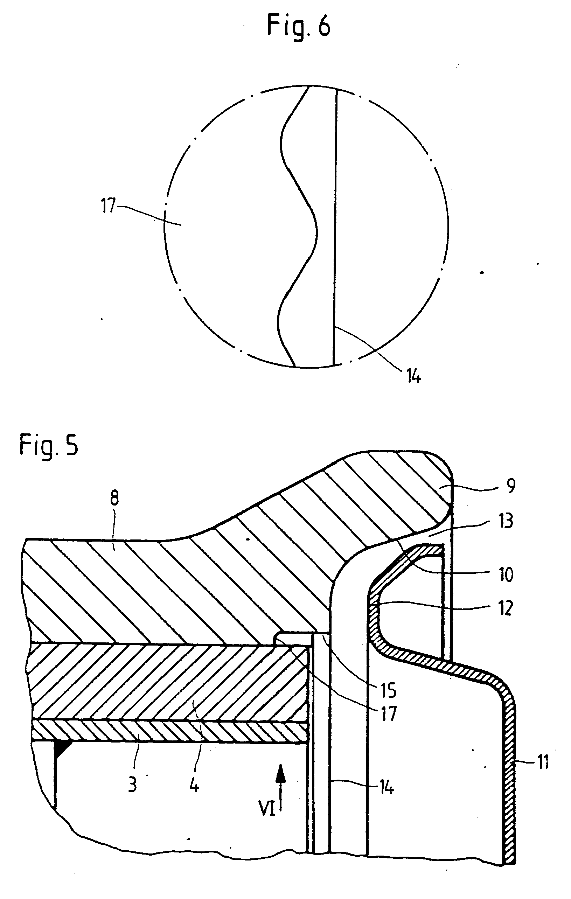

Die in Fig. 5 und Fig. 6 dargestellte zweite Ausführungsform weist einen Falz 15 mit einem umlaufenden, wellenförmigen radialen Schenkel 17 auf. Die wellenförmige Ausgestaltung dieses Schenkels 17 bewirkt, daß der Rand des Bremsbelages 4 nicht in den Falz 15 hineinwachsen kann, da die den Bremsbelag überragenden Wellenberge einen Überstand sofort abbrechen würden. In den Wellentälern ist der Verschleiß der Bremstrommel 2 zu erkennen.

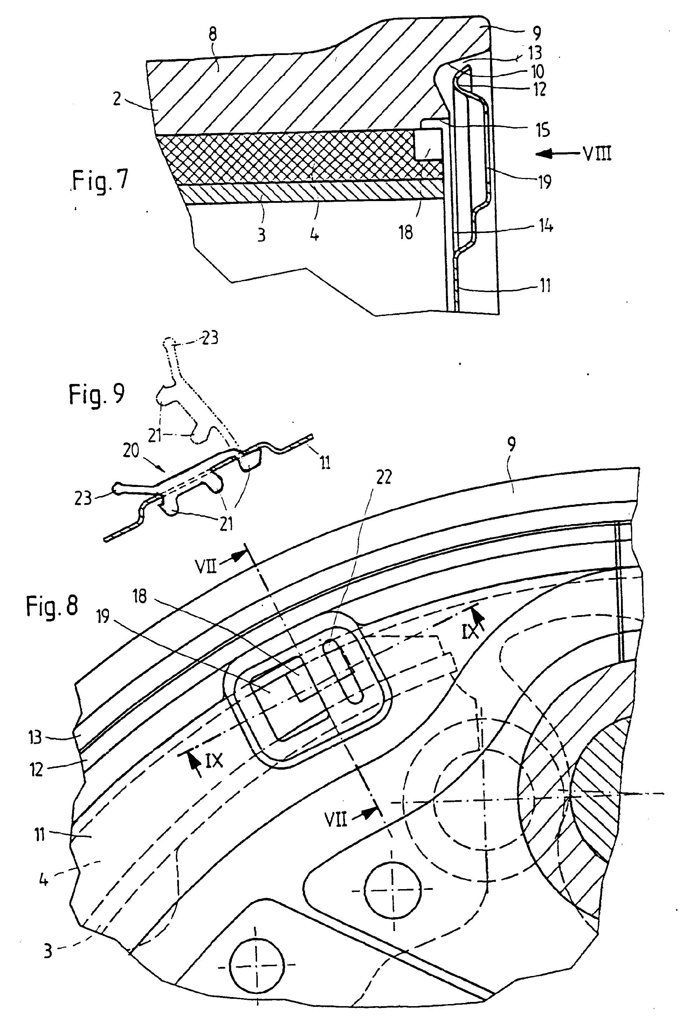

Bei einer weiteren Ausführungsform gemäß Fig. 7 und Fig. 8 weisen die Bremsbeläge 4 an dem der Öffnung 14 zugewandten Rand Ausnehmungen 18 auf. Diese Ausnehmungen 18 ermöglichen eine Kontrolle des Bremsbelagverschleißes und zusammen mit der Falz 15 auch des Bremstrommelverschleißes.

Die Kontrolle des Bremsbelag-Bremstrommelverschleißes wird durch ein in Fig. 7 bis Fig. 9 dargestelltes Sichtfenster 19 erleichtert. Das Sichtfenster 19 ist aus dem Abdeckblech 11 herausgestanzt und ermöglicht einen direkten Blick auf den Bremsbelag 4 und den Falz 15.

Um das Eindringen von Schmutz und Wasser in die Bremstrommel zu verhindern, kann das Sichtfenster 19 mit einer Abdeckung 20 aus Gummi oder Kunststoff verschlossen werden. Zum Befestigen der Abdeckung 20 am Abdeckblech 11 ist an der Abdeckung 20 ein Wulst 21 angeformt, der in einen parallel zum Sichtfenster 19 ausgestanzten Schlitz 22 eingepreßt ist. Mittels zweier weiterer Wülste 21 wird die Abdeckung 20 in dem Sichtfenster 19 festgelegt. Das Sichtfenster 19 kann durch Ziehen an einer an die Abdeckung 20 angeformten Lasche 22 geöffnet werden.

In den beschriebenen und dargestellten Ausführungsbeispielen ist die Erfindung an einer Bremstrommel 2 mit Randverstärkung 9 und Auswurfschräge 10 verwirklicht worden. Selbstverständlich kann die Erfindung auch an einer Bremstrommel benutzt werden, die bis zum freien Rand einen zylindrischen Mantel ohne Randverstärkung und ohne Auswurfschräge hat, bei der also der Mantel 8 und die Öffnung 14 gradlinig unter einem Winkel von ca. 90° konvergieren.

Am inneren Ende der Anlagefläche 7 ist der am Übergang zum Boden der Bremstrommel 2 eine umlaufende Nut 24 eingelassen, die in axialer Richtung die hintere Kante der Bremsbeläge 4 überlappt und in radialer Richtung eine Tiefe hat, die dem maximalen Bremstrommelverschleiß entspricht. Ohne eine solche Nut wäre es nach einem Bremsbelagwechsel unter Umständen notwendig, die Anlagefläche am inneren Ende spanabhebend nachzudrehen. Das kann mit der Nut 24 vermieden werden.

### Bezugszeichenliste

- 1: Achskörper
- 2: Bremstrommel
- 3: Bremsbacke
- 4: Bremsbelag
- 5: Stützlager
- 6: Bremsbrücke
- 7: Anlagefläche
- 8: Mantel
- 9: Randverstärkung
- 10: Auswurfschräge
- 11: Abdeckblech
- 12: Rand
- 13: Dichtspalt
- 14: Öffnung
- 15: Falz
- 16: Spalt
- 17: Schenkel
- 18: Ausnehmung
- 19: Sichtfenster
- 20: Abdeckung
- 21: Wulst
- 22: Schlitz
- 23: Lasche
- 24: Nut

## Patentansprüche

1. Bremstrommel mit einer zylindrischen Anlagefläche (7) für Bremsbeläge (4) und einer kreisförmigen Öffnung (14),
**dadurch gekennzeichnet,**
daß an der Öffnung (14) ein in die Anlagefläche (7) eingelassener, umlaufender Falz (15) angeordnet ist, der sich in axialer Richtung mindestens bis zu den Bremsbelägen (4) erstreckt.

2. Bremstrommel nach Anspruch 1, dadurch gekennzeichnet, daß der Falz (15) in axialer Richtung die Vorderkante der Bremsbeläge (4) überlappt.

3. Bremstrommel nach Anspruch 1, dadurch gekennzeichnet, daß der Falz (15) in radialer Richtung eine Tiefe hat, die dem maximalen Bremstrommelverschleiß entspricht.

4. Bremstrommel nach Anspruch 2, dadurch gekennzeichnet, daß ein radialer Schenkel (17) der Falz (15) umlaufend wellenförmig ausgebildet ist.

5. Bremstrommel nach Anspruch 1, dadurch gekennzeichnet, daß die Bremsbeläge (4) an dem der Öffnung (14) zugewandten äußeren Rand Ausnehmungen (18) aufweisen, die den radialen Schenkel (17) der Falz (15) in axialer Richtung überragen.

6. Bremstrommel nach Anspruch 1, dadurch gekennzeichnet, daß ein Abdeckblech (11) oberhalb der Falz (15) ein Sichtfenster (19) aufweist.

7. Bremstrommel nach Anspruch 1, dadurch gekennzeichnet, daß am Boden eine in Anlagefläche (7) eingelassene Nut (24) angeordnet ist.

8. Bremstrommel nach Anspruch 7, dadurch gekennzeichnet, daß die Nut (24) in axialer Richtung die hintere Kante der Bremsbeläge (4) überlappt.

9. Bremstrommel nach Anspruch 7, dadurch gekennzeichnet, daß die Nut (24) in radialer Richtung eine Tiefe hat, die dem maximalen Bremstrommelverschleiß entspricht.

## Claims

1. Brake drum with a cylindrical contact surface (7) for brake linings (4) and a circular opening (14), characterized in that an encircling groove (15) let into the contact surface (7) is arranged at the opening (14), this groove extending at least as far as the brake linings (4) in the axial direction.

2. Brake drum according to Claim 1, characterized in that the groove (15) overlaps the front edge of the brake linings (4) in the axial direction.

3. Brake drum according to Claim 1, characterized in that the groove (15) has a depth in the radial direction which corresponds to the maximum brake drum wear.

4. Brake drum according to Claim 2, characterized in that a radial side (17) of the groove (15) is of corrugated shape all the way round.

5. Brake drum according to Claim 1, characterized in that, at the outer rim, adjacent to the opening (14), the brake linings (4) have recesses (18) which extend beyond the radial side (17) of the groove (15) in the axial direction.

6. Brake drum according to Claim 1, characterized in that a cover plate (11) above the groove (15) has an inspection window (19).

7. Brake drum according to Claim 1, characterized in that a slot (24) let into contact surface (7) is arranged at the bottom.

8. Brake drum according to Claim 7, characterized in that the slot (24) overlaps the rear edge of the brake linings (4) in the axial direction.

9. Brake drum according to Claim 7, characterized in that the slot (24) has a depth in the radial direction which corresponds to the maximum brake drum wear.

## Revendications

1. Tambour de frein comprenant une surface d'appui cylindrique (7) pour des garnitures de frein (4) et une ouverture circulaire (14), caractérisé en ce qu'au niveau de l'ouverture (14) est réalisé un pli périphérique (15) qui est pratiqué dans la surface d'appui (7) et qui s'étend dans la direction axiale au moins jusqu'aux garnitures de frein (4).

2. Tambour de frein selon la revendication 1, caractérisé en ce que, dans la direction axiale, le pli (15) recouvre le bord avant des garnitures de frein (4).

3. Tambour de frein selon la revendication 1, caractérisé en ce que, dans la direction radiale, le pli (15) a une profondeur qui correspond à l'usure maximale du tambour de frein.

4. Tambour de frein selon la revendication 2, caractérisé en ce qu'une branche radiale (17) du pli (15) présente une forme ondulée sur sa périphérie.

5. Tambour de frein selon la revendication 1, caractérisé en ce que, sur le bord extérieur tourné vers l'ouverture (14), les garnitures de frein (4) comportent des évidements (18) qui dépassent de la branche radiale (17) du pli (15) dans la direction axiale.

6. Tambour de frein selon la revendication 1, caractérisé en ce qu'une tôle de recouvrement (11) disposée au-dessus du pli (15) comporte un hublot (19).

7. Tambour de frein selon la revendication 1, caractérisé en ce que, dans le fond, est réalisée une rainure (24) pratiquée dans la surface d'appui (7).

8. Tambour de frein selon la revendication 7, caractérisé en ce que, dans la direction axiale, la rainure (24) recouvre le bord arrière des garnitures de frein (4).

9. Tambour de frein selon la revendication 7, caractérisé en ce que, dans la direction radiale, la rainure (24) a une profondeur qui correspond à l'usure maximale du tambour de frein.
